# EUROPÄISCHE PATENTSCHRIFT

(11) **EP 1 485 279 B1**
(45) Veröffentlichungstag und Bekanntmachung des Hinweises auf die Patenterteilung: **02.11.2006**
(21) Anmeldenummer: 02798279.2
(22) Anmeldetag: 19.12.2002
(51) Int. Cl.: B60S 1/32, B60S 1/38, B60S 1/40

(54) **VORRICHTUNG ZUM SEITLICHEN F HREN EINES WISCHBLATTS**
DEVICE FOR LATERALLY GUIDING A WIPER BLADE
DISPOSITIF CON U POUR GUIDER LATERALEMENT UN BALAI D'ESSUIE-GLACE

(30) Priorität: 12.03.2002 DE 10210720
(43) Veröffentlichungstag der Anmeldung: 15.12.2004
(73) Patentinhaber: ROBERT BOSCH GMBH, 70442 Stuttgart (DE)
(72) Erfinder: KRAUS, Achim, 77815 Buehl (DE); BUREL, Charles, F-67450 Lampertheim (FR); STEURER, Liane, 77815 Buehl-Neusatz (DE); MAYER, Stephan, 76137 Karlsruhe (DE); RITT, Jean-Marc, F-67000 Strasbourg (FR); VANGEEL, Tom, B-3540 Herk-de-Stad (BE)
(86) Internationale Anmeldenummer: PCT/DE2002/004657
(87) Internationale Veröffentlichungsnummer: WO 2003/076241

(56) Entgegenhaltungen:
- EP-A- 1 024 067
- WO-A-02/060730
- DE-A- 3 744 237
- DE-A- 3 829 343
- DE-A- 4 406 131
- DE-A- 4 436 604
- DE-A- 10 142 997
- DE-A- 19 647 347
- DE-A- 19 731 683

## Beschreibung

### Stand der Technik

Die Erfindung geht von einer Vorrichtung zum seitlichen Führen eines Wischblatts nach dem Oberbegriff des Anspruchs 1 aus.

Bekannte Scheibenwischer besitzen einen Wischarm, der aus einem Befestigungsteil und einem damit gelenkig verbundenen Gelenkteil mit einer Wischstange aufgebaut ist. Mit dem freien Ende der Wischstange ist ein Wischblatt gelenkig verbunden, das aus einer Wischleiste und einem Wischleistenträger aufgebaut ist, in der Regel einem Tragbügelsystem mit einem Mittelbügel und gegebenenfalls mit untergeordneten Bügeln, z.B. einem Zwischenbügel und/oder Krallenbügeln, die die Wischleiste halten. Die Bügel sind mit den untergeordneten Bügeln ebenfalls gelenkig verbunden, so dass sich die Wischleiste während der Schwenkbewegung einer Wölbung der Fahrzeugscheibe anpassen kann. Solche Scheibenwischer sind z.B. aus der DE 37 44 237 A1 bekannt. Die Gelenke zwischen den Bügeln werden in der Regel durch Kunststoffteile gebildet, die gleichzeitig die Stirnseite des Profils des übergeordneten Bügels abdekken.

Aus der DE 197 38 232 A1 ist ferner ein Wischleistenträger in Form eines Tragelements aus einem elastischen, hochfesten Kunststoff für eine Wischleiste bekannt, das im unbelasteten Zustand eine Krümmung aufweist, die so ausgelegt ist, dass sich ein gleichmäßiger Anpressdruck ergibt, wenn sich im Betrieb des Wischblatts die Wischleiste vollständig an die Fahrzeugscheibe anlegt. Es sind ferner ähnliche Wischblätter mit einem Tragelement aus Federstahl bekannt. An den Stirnseiten werden als Abschluss des Profils Kappen aus Kunststoff montiert. Im Folgenden wird unter Wischleistenträger sowohl ein Tragbügelsystem als auch ein Tragelement im oben beschriebenen Sinn verstanden.

Wischblätter neigen während des Wischvorgangs häufig zum Schwingen. Vor allem bei relativ langen Wischblättern und Wischblättern, die eine geringe Steifigkeit in seitlicher Richtung besitzen, ist die Führung am Gelenk zwischen dem Wischblatt und dem Wischarm nicht ausreichend stabil, um diese Schwingungen zu unterbinden. Da ein Wischblatt ein schlankes Bauteil ist und da auf Grund großer Geschwindigkeitsunterschiede zwischen dem antriebsseitigen, inneren Bereich und dem äußeren Bereich des Wischblatts unterschiedliche Reibverhältnisse vorliegen, sowie wegen der Stick-Slipeffekte, wird, das Wischblatt zum Schwingen angeregt. Dies führt insbesondere am Innenkreis des Wischblatts, wo besonders kleine Reibgeschwindigkeiten vorherrschen, zu unerwünschten seitlichen Bewegungen, die ab einer bestimmten Größe dazu führen können, dass das Wischblatt am Wischarm anschlägt und Klappergeräusche verursacht. Dies ist besonders kritisch, wenn die Fahrzeugscheiben trocken, verschmutzt, vereist oder nicht ausreichend feucht sind oder Schnee auf der Fahrzeugscheibe liegt. Da das Wischblatt dabei den Kontakt zur Fahrzeugscheibe kurzfristig verlieren kann, ist außerdem das Wischbild unbefriedigend. Das Wischblatt neigt umso eher zum Rattern, je mehr Bügelteile es aufweist. Ferner verhalten sich leichte Wischblätter mit einer geringen Federsteifigkeit ungünstiger als andere.

Aus der DE 197 31 683 A1 ist ferner eine Vorrichtung zum Führen des Wischblatts bekannt, die ein erstes und ein zweites Teil aufweist. Sie ist im Bereich einer Anlenkstelle eines Krallenbügels angeordnet und mit dem Gelenkteil des Wischarms fest verbunden, z.B. durch Kleben, Schweißen, Löten, Klippsen, Klemmen usw. Das erste Teil der Einrichtung besitzt Führungswangen, welche die Gelenkstelle des Krallenbügels umgreifen und in Bezug auf den Wischarm seitlich führen. Auch das zweite Teil weist Führungswangen auf, zwischen denen das erste Teil teleskopartig geführt ist, so dass dessen Führungswangen kurz gehalten werden können und eine Kollision mit der Fahrzeugscheibe auch bei starken Wölbungen der Fahrzeugscheibe nicht zu befürchten ist. Das erste Teil ist zweckmäßigerweise verliersicher mit der Vorrichtung verbunden, z.B. durch ein nachgiebiges Element.

Die Vorrichtung kann aus einzelnen Blechteilen hergestellt und zusammengesetzt sein, bevorzugt ist sie jedoch ein Kunststoffspritzteil aus einem geeigneten Kunststoff. In jedem Fall werden aber zum Führen des Wischblatts zusätzliche Bauteile benötigt, wodurch ein erhöhter Fertigungs- und Montageaufwand und zusätzliche Materialkosten entstehen. Zwischen den Führungsflächen der Einrichtung werden in der Regel Luftspalte vorgesehen, um zu verhindern, dass das Gelenk zwischen Wischblatt und Wischarm durch toleranzbehaftete Wischarmgeometrien, z.B. Kröpfungen der Wischstange, nicht klemmt. Auch hierbei können Klappergeräusche entstehen, weil das seitliche Schwingen zwar stark vermindert, aber nicht vollständig vermieden wird.

In der älteren Patentanmeldung WO 03/026938 (dieses Dokument fällt unter Artikel 54(3) EPÜ) ist in den Ausführungen nach Fig. 10 und 11 ein Wischblatt mit einem Endklipp dargestellt, an dessen zum Ende des Wischblatts weisender Stirnseite ein quaderförmiger Fügungszapfen mit einer Stirnseite angeformt ist. Ausgehend von der angebundenen Stirnseite erstreckt sich der Führungszapfen in Längsrichtung des Wischblatts, sodass der Führungszapfen das Ende der Wischleiste des Wischblatts in Längsrichtung überragt.

Dokument DE 4 436 604 offenbart eine Vorrichtung gemäß des Oberbegriffes von Anspruch 1.

### Vorteile der Erfindung

Nach der Erfindung weist die Vorrichtung zum seitlichen Führen eines Wischblatts, auch Wischblattführung genannt, einen Klipp auf, der auf dem Wischleistenträger und/oder der Wischleiste zu befestigen ist und an einer Stirnseite eines Führungszapfens angeformt ist, der sich ausgehend von seiner angebundenen Stirnseite in Längsrichtung des Wischblatts erstreckt und seitliche Führungsflächen besitzt die eine Konvexe Querschittkontur besitzen. Dabei kann der Klipp in vorteilhafter Weise ein Endklipp sein, an dem der Führungszapfen angeformt ist, so dass kein zusätzliches Bauteil und kein zusätzlicher Montagevorgang für den Führungs-zapfen anfallen. Allerdings verändert das antriebsseitige Ende des Wischblatts seine relative Position zum Gelenkteil bei gekrümmten Windschutzscheiben am meisten, so dass für die relative Hubbewegung zwischen dem Ende des Wischblatts und dem Wischarm lange Führungsbügel vorgesehen werden müssen, die während der Wischbewegung einen entsprechenden Abstand zur Windschutzscheibe einhalten müssen. Es kann daher zweckmäßig sein, den Klipp als Zwischenklipp zu gestalten und näher zur Anlenkstelle des gelenkfreien Wischblatts an den Wischarm zu platzieren, wo die Relativbewegung zwischen dem Wischblatt und dem Wischarm geringer ist, so dass relativ kurze Führungswangen ausreichen. In beiden Fällen ergibt sich eine einfache, flach bauende Wischblattführung, die die Bauhöhe eines gelenkfreien Wischblatts nicht vergrößert.

Der Führungszapfen ist zweckmäßigerweise im oberen Bereich des Klipps angeordnet. Er hat somit einen großen Abstand von der Windschutzscheibe, wodurch ihn die Führungswangen genügend überlappen können, um eine ausreichende Hubbewegung zu ermöglichen. In vorteilhafter Weise besitzen die Führungsflächen an den Führungswangen der Führungsbügel eine konvexe Querschnittkontur. Dadurch, ergibt sich eine Punktberührung oder Linienberührung, die einen Winkelversatz der Bauteile zueinander zulassen, ohne dass die Relativbewegung zueinander durch Klemmen behindert wird. Somit übt die Wischblattführung außer der seitlichen Führung keinen Zwang auf das Wischblatt aus, was anderenfalls das Wischergebnis negativ beeinflussen könnte.

Damit der Führungszapfen nicht aus dem Führungsbügel rutscht, wenn der Wischarm mit dem Wischblatt von der Windschutzscheibe abgehoben wird, sind die Führungsflächen an dem Führungszapfen und/oder dem Führungsbügel durch Stops begrenzt, z.B. durch Haltenasen, Nocken, Stege oder dgl. Die Begrenzung ist besonders bei gelenklosen Wischblättern wichtig, da diese in Längsrichtung nicht sehr biegesteif sind, im unbelasteten Zustand eine große Krümmung aufweisen und daher besonders beim Abklappen auch in Längsrichtung des Wischblatts aus der Führung rutschen können.

Um Fertigungstoleranzen ausgleichen zu können, die einen zu starken seitlichen Druck auf die Wischblattführung ausüben, wird der Führungszapfen gemäß einer Ausgestaltung der Erfindung mit einer größeren elastischen Nachgiebigkeit in seitlicher Richtung ausgestattet, z.B. indem er eine längliche Querschnittkontur in Form eines Rechtecks oder Ovals erhält. Durch die Wahl des Verhältnisses der maximalen Höhe zur maximalen Breite kann die Nachgiebigkeit den Erfordernissen angepasst werden, wobei auf jeden Fall eine ausreichende Seitenführung erhalten bleiben muss.

Nach einer weiteren Ausgestaltung der Erfindung weist der Führungszapfen zwei Führungswände mit äußeren, seitlichen Führungsflächen auf, die einen Freiraum begrenzen und durch ein Federelement gegeneinander abgestützt sind. Durch die federnd nachgiebigen Führungsflächen können ebenfalls Fertigungstoleranzen der Einzelbauteile ausgeglichen werden. Zusätzlich wird erreicht, dass der Führungszapfen spielfrei zwischen den Führungswangen geführt wird und somit Klappergeräusche beim Lastwechsel vermieden werden. Ein spielfreier und sicherer Halt des Führungszapfens zwischen den Führungsflächen der Wischblattführung verbessert das Wischergebnis und verhindert einen übermäßigen Verschleiß des Wischgummis.

Das zweite Teil der Wischblattführung, der Führungsbügel, ist am Wischarm zu befestigen, und zwar am Gelenkteil oder an einer Wischstange, die an dem Gelenkteil angeformt oder mit dieser fest verbunden ist. Soll der Führungsbügel an einem Gelenkteil befestigt werden, das ein zur Windschutzscheibe hin offenes, u-förmiges Querschnittprofil aufweist, besitzt er zweckmäßigerweise ebenfalls ein im Wesentlichen u-förmiges Querschnittprofil, dessen Außenkontur der Innenkontur des Gelenkteils angepasst ist. Das U-Profil wird von zwei Seitenteilen gebildet, die durch eine Deckwand miteinander verbunden sind, wobei die Seitenteile Rastmittel aufweisen, die in entsprechende Gegenstücke des Gelenkteils einrasten und den Führungsbügel halten. Die Rastmittel können Rastzapfen sein, die in entsprechende Bohrungen oder Vertiefungen des Gelenkteils einrasten. Die Seitenteile des aus Kunststoff gefertigten Führungsbügels sind in der Regel elastisch genug, um bei der Montage zunächst nachzugeben, damit die Rastzapfen bis zu den Bohrungen geschoben werden können, wo sie dann einrasten. Die Rastzapfen können aber auch auf Federzungen angeordnet sein, die die gleiche Funktion wie die nachgiebigen Seitenteile haben, jedoch flexibler sind, ohne die Stabilität des Führungsbügels selbst zu beeinträchtigen.

Bei einer anderen Ausführung werden die Rastmittel unmittelbar durch Federzungen gebildet, die sich mit ihrer freien Stirnfläche an Haltenasen abstützen, welche vom unteren Rand des Gelenkteils in den freien Raum des u-förmigen Profils des Wischarms bzw. des Gelenkteils abgewinkelt sind. Dabei sind zur Lagebestimmung nur geringe Fertigungstoleranzen einzuhalten. Ferner werden weder die Festigkeit noch der optische Eindruck des Gelenkteils durch Bohrungen in den Seitenwänden beeinträchtigt.

Der Führungsbügel ist vorzugsweise als Kunststoffteil ausgeführt, so dass alle notwendigen Formelemente beim Fertigen angeformt werden, z.B. weitere Federzungen mit Buckeln, die definierte Kontaktstellen zum Gelenkteil bilden und Fertigungstoleranzen ausgleichen. In Längsrichtung stützt sich der Führungsbügel zweckmäßigerweise einerseits über eine Federzunge an einer Federeinhängung des Gelenkteils ab, während er in der entgegen gesetzten Richtung an den konisch zulaufenden Seitenwänden des u-förmigen Profils des Gelenkteils gehalten wird. Um dem Führungsbügel in Querrichtung eine ausreichende Steifigkeit zu geben, sind die Seitenteile des Führungsbügels vorteilhafterweise durch eine gebogene, federnd nachgiebige Stützrippe gegenseitig abgestützt. Ferner ist der Führungsbügel zu einem großen Teil vom Gelenkteil verdeckt und beansprucht keinen zusätzlichen Einbauraum. Ein solcher Scheibenwischer verursacht weniger Windgeräusche und besitzt ein besseres Design.

Von der Deckwand des Führungsbügels verlaufen zwei Führungswangen zur offenen Seite. Die Führungswangen weisen an ihren einander zugewandten Seiten Führungsflächen auf, zwischen denen der Führungszapfen gleitet. An ihren freien, zur Windschutzscheibe weisenden Enden besitzen die Führungsbügel nach innen weisende Haltenasen, so dass der Führungszapfen in dieser Richtung nicht aus der Führung gleiten kann, wenn man den Wischarm von der Windschutzscheibe abhebt. Um zudem eine Begrenzung in Längsrichtung des Wischblatts in bestimmten Stellungen zu erhalten, hat auch der Führungszapfen an seinem freien Ende eine Haltenase.

Nach einer weiteren Ausgestaltung der Erfindung weist mindestens eine Führungswange eines Führungsbügels eine Federzunge auf, die einen Teil der Führungsfläche bildet. Die Federzunge drückt den Führungszapfen spielfrei gegen die gegenüber liegende Führungsfläche, so dass auch in diesem Fall Toleranzen spielfrei ausgeglichen und Geräusche reduziert werden, selbst wenn ein nicht elastisch nachgiebiger Führungszapfen verwendet wird.

Verläuft das Ende des Wischblatts nicht innerhalb des U-förmigen Profils des Gelenkteils oder der daran angeformten Wischstange, sondern parallel zu diesen, oder besitzt die Wischstange ein Vollprofil, ist es zweckmäßig, dass der Führungsbügel einen Klippteil aufweist, mit dem er an der Wischstange bzw. dem Gelenkteil befestigt ist. Dies ist insbesondere erforderlich, wenn der Führungszapfen an einem Zwischenklipp angeformt ist, der im Bereich einer Wischstange mit Vollprofil am Wischleistenträger befestigt ist. Zur Verbesserung der Seitenführung des Führungsbügels sind seine Führungswangen an ihren freien Enden durch einen Steg miteinander verbunden. Aus dem gleichen Grunde ist es vorteilhaft, die zum Klippteil weisende Führungswange durch eine Rippe an eine benachbarte Rastnase im oberen Bereich des seitlichen Klippteils anzubinden.

### Zeichnung

Weitere Vorteile ergeben sich aus der folgenden Zeichnungsbeschreibung. Die Zeichnung, die Beschreibung und die Ansprüche enthalten zahlreiche Merkmale in Kombination.

Es zeigen:
- Fig. 1: eine schematische Seitenansicht eines Wischarms mit einem gelenkig verbunden Wischblatt,
- Fig. 2: eine Draufsicht eines Endklipps,
- Fig. 3: eine Seitenansicht des Endklipps nach Fig. 2,
- Fig. 4: eine Ansicht eines Endklipps nach Fig. 2 in Richtung eines Pfeils IV in Fig. 3,
- Fig. 5: eine Variante zu einem Endklipp nach Fig. 2
- Fig. 6: eine weitere Variante zu einem Endklipp nach Fig. 2,
- Fig. 7: eine Seitenansicht eines Führungsbügels,
- Fig. 8: eine Draufsicht eines Führungsbügels nach Fig. 6,
- Fig. 9: einen in einem Gelenkteil montierten Führungsbügel in einem Querschnitt entsprechend der Linie IX-IX in Fig. 8,
- Fig. 10: eine Variante zu Fig. 9,
- Fig. 11: eine perspektivische Teilansicht eines Gelenkteils mit einem Wischblatt von unten,
- Fig. 12: eine Variante zu Fig. 11,
- Fig. 13: eine schematische Draufsicht auf einen Wischarm mit einem Wischblatt,
- Fig. 14: ein Detail in vergrößerter Darstellung entsprechend der Linie XIV in Fig. 13,
- Fig. 15: eine perspektivische Darstellung eines Führungsbügels mit seitlichem Klippteil,
- Fig. 16: eine Ansicht in Längsrichtung eines Zwischenklipps,
- Fig. 17: eine perspektivische Darstellung des Zwischenklipps nach Fig. 16 und
- Fig. 18: die Wischblattführung nach Fig. 14 in einer Ansicht von unten.

### Beschreibung der Ausführungsbeispiele

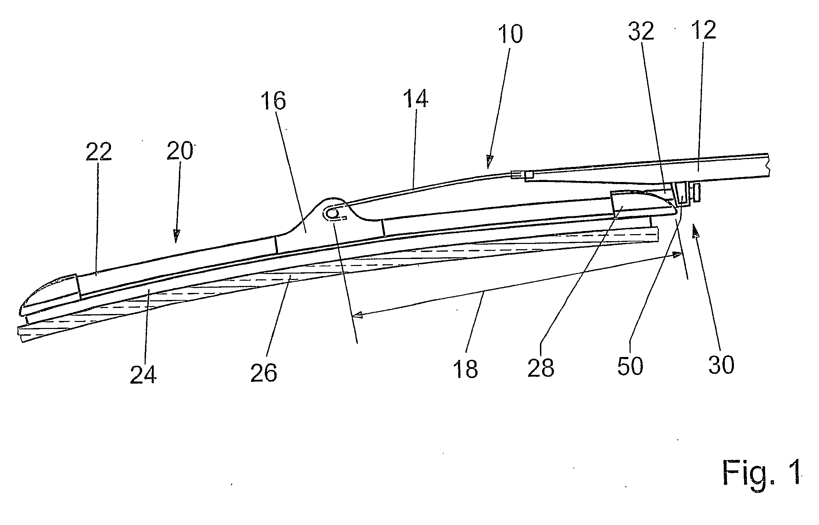

Von einem Wischarm 10 ist ein Gelenkteil 12 und eine Wischstange 14 dargestellt, mit der ein Wischblatt 20 gelenkig über ein daran befestigtes Verbindungsstück 16 verbunden ist (Fig. 1). Das Wischblatt 20 besitzt einen elastischen, gelenkfreien Wischleistenträger 22, der als Spoiler ausgebildet und an dem eine Wischleiste 24 befestigt ist. Die gelenkige Verbindung zwischen der Wischstange 14 und dem Wischblatt 20 und die Elastizität des Wischleistenträgers 22 ermöglichen es, dass sich die Wischleiste 24 während der Wischbewegung der Wölbung einer Windschutzscheibe 26 anpassen kann. Dabei bewegt sich das Wischblatt 20 in einer Ebene senkrecht zur Windschutzscheibe 26 relativ zum Wischarm 10, wobei die relative Hubbewegung am Ende des Wischblatts 20 besonders groß ist.

Zum seitlichen Führen des Wischblatts 20 ist in einem Bereich 18 zwischen der gelenkigen Verbindung und seinem Ende, das dem Wischarm 10 zugewandt ist, eine Vorrichtung vorgesehen, eine so genannte Wischblattführung 30. Sie besteht aus einem Endklipp 28 mit einen Führungszapfen 32, der sich in Längsrichtung des Wischblatts 20 erstreckt, und aus einem am Wischarm 10, vorzugsweise an seinem Gelenkteil 12, zu befestigenden Führungsbügel 50 mit zwei Führungswangen 58, zwischen denen der Führungszapfen 32 geführt ist.

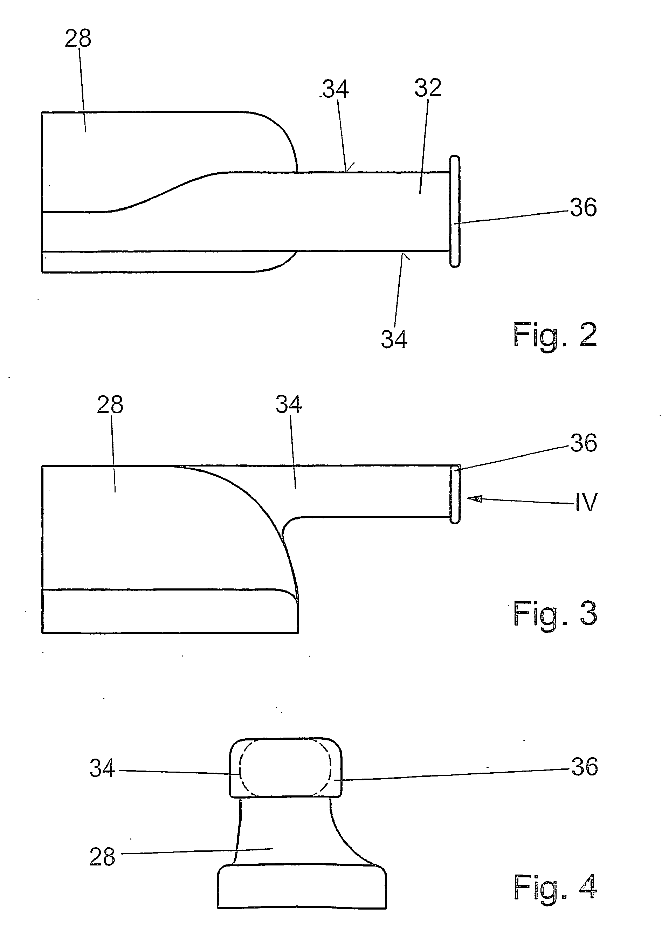

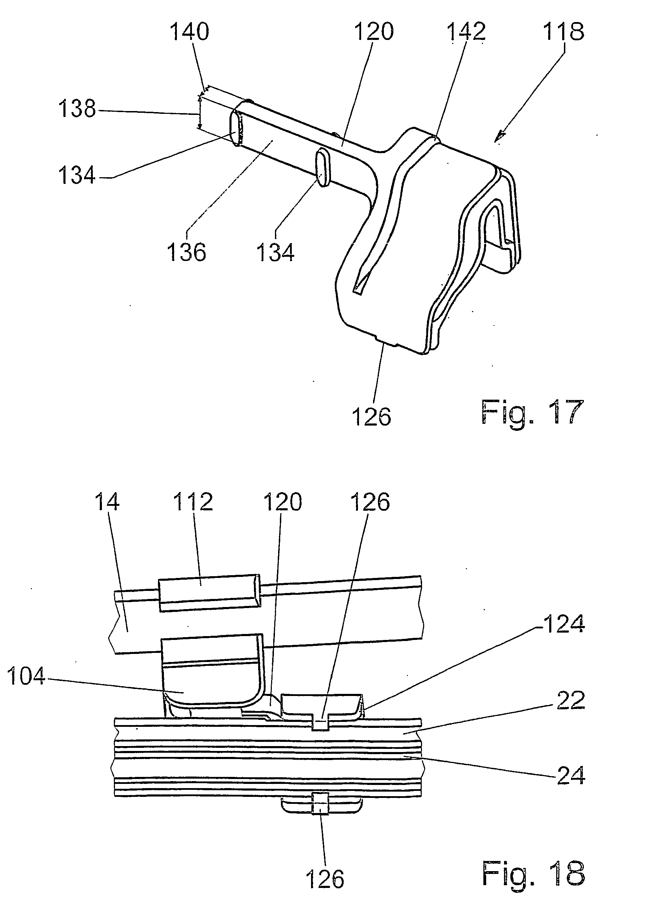

Der Endklipp 28 ist vorzugsweise ein Kunststoffteil, an dem der Führungszapfen 32 angeformt ist (Fig. 2, Fig. 3, Fig. 4, Fig. 16, Fig. 17). Dieser weist zwei seitliche Führungsflächen 34 zweckmäßigerweise mit einer konvexen Querschnittkontur auf, wodurch kleine Kontaktflächen entstehen, welche Winkelabweichungen zulassen und ein Verklemmen des Führungszapfens 32 zwischen den Führungswangen 58 verhindern. Stattdessen oder zusätzlich können die den Führungswangen 58 zugeordneten Führungsflächen 60 ebenfalls im Querschnitt konvex velaufen. Der Führungszapfen 32 ist an der oberen Begrenzung des Endklipps 28 angeordnet, so dass der Abstand zur Windschutzscheibe 26 relativ groß ist und keine Gefahr besteht, dass die Führungswangen 58 der Wischblattführung 30 trotz relativ langer Führungsflächen 60 eventuell mit der Windschutzscheibe 26 kollidieren. An seinem freien Ende besitzt der Führungszapfen 32 eine angeformte Haltenase 36, die einen Anschlag in Längsrichtung des Wischblatts 20 bildet und eine ungewollte Demontage verhindert, wenn das Wischblatt 20 von der Windschutzscheibe 26 abgeklappt wird.

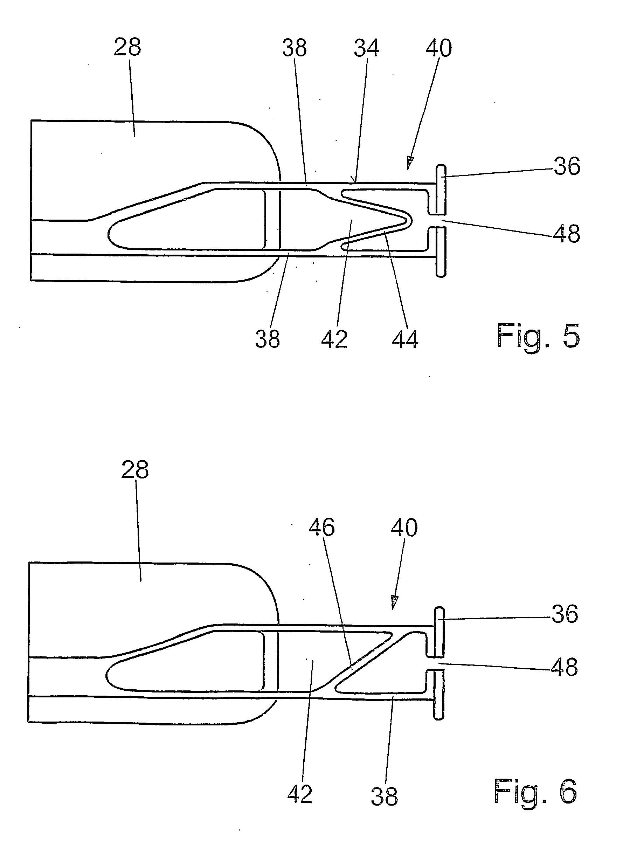

In einer Ausführung nach Fig. 5 weist ein Führungszapfen 40 zwei Führungswände 38 mit seitlichen Führungsflächen 34 auf. Diese begrenzen einen zwischen ihnen liegenden Freiraum 42 und stützen sich durch ein Federelement, in Form einer v-förmigen Biegefeder 44, gegeneinander ab. Zudem ist die Haltenase 36 durch einen Spalt 48 in zwei den Führungswänden 38 zugeordnete Teile getrennt. Die Führungsflächen 34 des Führungszapfen 40 sind somit entkoppelt und können zueinander federn, wobei die Federeigenschaften vorteilhafterweise über die Form und die Abmessung der Biegefeder 44 variiert werden können. Fig. 6 zeigt beispielsweise ein weiteres Federelement in Form einer schräg zu den Führungswänden 38 verlaufenden Blattfeder 46.

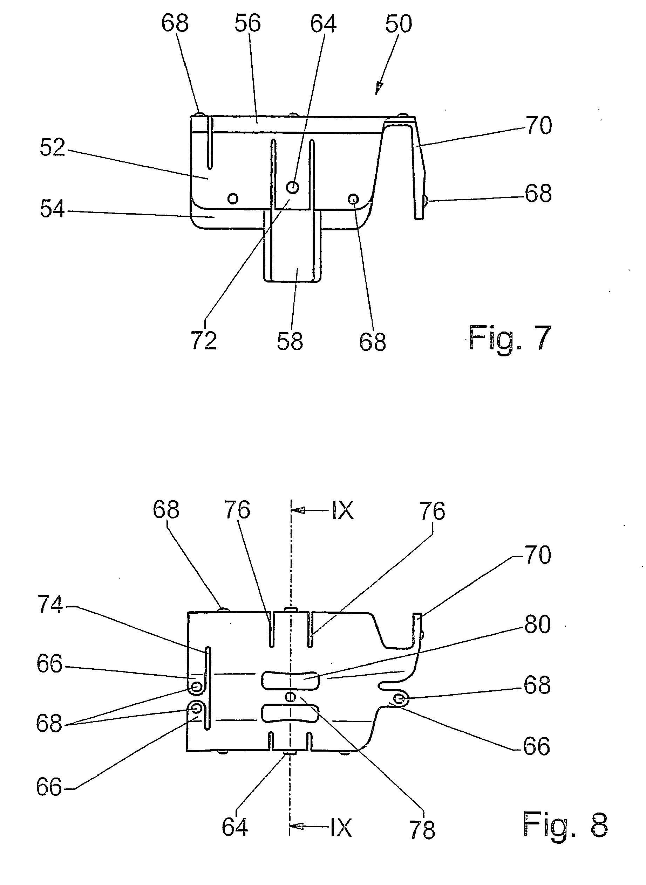

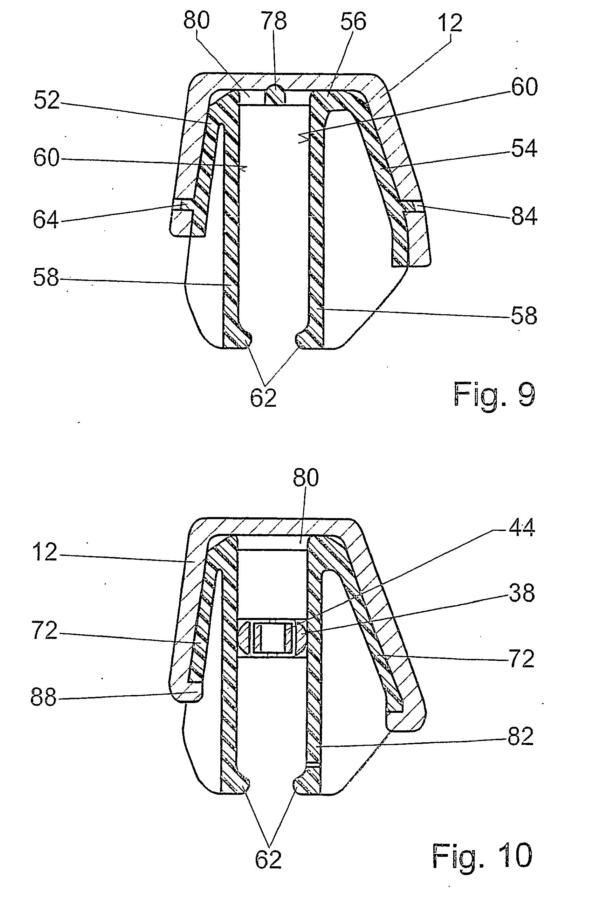

Der Führungsbügel 50 besitzt ein im Wesentlichen u-förmiges Querschnittprofil, das von einer Deckwand 56 und zwei Seitenteilen 52, 54 gebildet wird (Fig. 7 bis Fig. 10). Die Seitenteile 52, 54 sind der Innenkontur des Gelenkteils 12 angepasst. Zur Versteifung können sie durch eine gebogene, federnd nachgiebige Stützrippe 86 gegenseitig abgestützt sein. An einem mittleren Bereich der Seitenteile 52, 54 sind als Rastmittel Rastzapfen 64 angeformt. Durch die Elastizität der Seitenteile 52, 54 geben diese bei der Montage nach, so dass die Rastzapfen 64 in das u-förmige Profil geschoben werden können und in der Endposition in Bohrungen 84 oder entsprechende Vertiefungen in den Seitenwänden des Gelenkteils 12 einrasten (Fig. 9). Die Rastzapfen 64 können auch an Federzungen 72 angeordnet sein, die durch Schlitze 76 aus einem mittleren Bereich der Seitenteile 52, 54 gebildet sind.

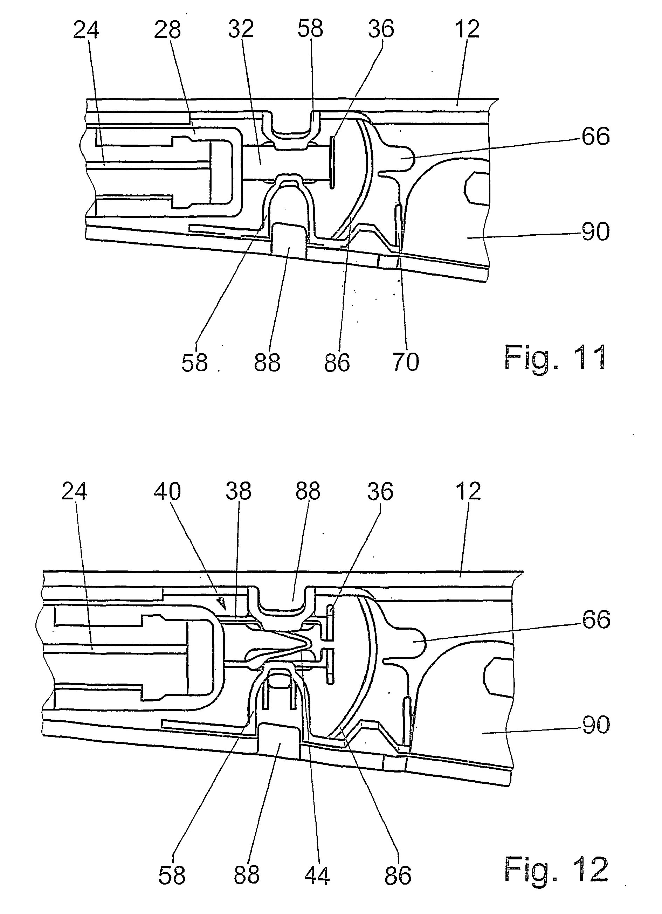

Die Federzungen 72 können auch ohne die Rastzapfen 64 als Rastmittel dienen, indem sie sich nach der Montage des Führungsbügels 50 mit ihren freien Stirnseiten an Haltenasen 88 abstützen, die vom unteren Rand des Gelenkteils 12 nach innen abgewinkelt sind (Fig. 10). Die Breite der Federzungen 72 ist mindestens so groß wie die Breite der Haltenasen 88, damit diese bei der Montage zwischen den Schlitzen 76 ausreichend Platz finden. Der Führungsbügel 50 ist in Längsrichtung durch eine weitere Federzunge 70 fixiert, die sich an einer Federeinhängung 90 des Gelenkteils 12 abstützt und den Führungsbügel 50 gegen die zur gelenkigen Verbindungsstelle des Wischblatts 20 konisch zulaufenden Seitenwände des Gelenkteils 12 drückt (Fig. 11).

Um spielfreie, definierte Anlagepunkte zwischen dem Führungsbügel 50 und dem Gelenkteil 12 zu erhalten, sind an der Außenkontur des Führungsbügels 50 Buckel 68 vorgesehen, die vorzugsweise an Federzungen 66, 70, 72 angeordnet sind. Im Bereich der Deckwand 56 befinden sich Buckel 68 an Federzungen 66, von denen zwei durch einen quer verlaufenden Schlitz 74 gebildet werden. Der Führungsbügel 50 taucht möglichst weit in das Profil des Gelenkteils 12 ein, wobei das Wischblatt 20 zu einem großen Teil vom Gelenkteil 12 verdeckt wird.

Der Führungsbügel 50 ist vorzugsweise aus Kunststoff in einem Spritzgießverfahren hergestellt. Dabei ist die Form und die Anordnung der Formelemente zum Toleranzausgleich und zum Befestigen so gewählt, dass der Führungsbügel 50 schieberlos entformt werden kann. Hierzu weist die Deckwand 56 einen Durchbruch 80 auf, der bei der Ausführung nach Fig. 8 durch einen Steg 78 unterteilt ist, auf dem sich ebenfalls ein Bukkel 68 zur Anlage an der Deckwand des Wischarms 10 befindet.

Zur seitlichen Führung des Führungszapfens 32, 40 besitzt der Führungsbügel 50 zwei Führungswangen 58. Sie verlaufen von der Deckwand 56 zur offenen Seite hin und weisen an ihren zugewandten Seiten Führungsflächen 60 auf, zwischen denen der Führungszapfen 32 oder 40 während der Wischbewegung geführt wird (Fig. 9, Fig. 10). Die Führungsflächen 60 weisen eine bestimmte Länge auf, so dass der Führungszapfen 32 oder 40 eine Hubbewegung ausführen kann, welche durch die Höhenveränderung zwischen dem Wischblatt 20 und dem Gelenkteil 12 aufgrund der unterschiedlichen Krümmung der Windschutzscheibe 26 notwendig ist. Haltenasen 62, die an den freien Enden der Führungswangen 58 angeformt sind, begrenzen die Führungsflächen 60. Sie verhindern, dass der Führungszapfen 32 oder 40 beim Abklappen der Wischblatts 20 in Richtung zur Windschutzscheibe 26 aus dem Führungsbügel 50 gleitet.

Wie oben erwähnt, besitzt der Führungszapfen 40 federnde Führungswände 38, die vorteilhafterweise spielfrei an den Führungsflächen 60 der Führungswangen 58 anliegen, so dass ein seitliches Schwingen und Klappern des Wischblatts 20 verhindert wird. Um die gleiche Wirkung auch bei einer Kombination mit einem starren Führungszapfen 32 zu erreichen, kann eine Führungswange 58 teilweise als Federzunge 82 ausgebildet sein, die dann einen Teil der Führungsfläche 60 bildet und den Führungszapfen 32 bzw. 40 gegen die gegenüber liegende Führungsfläche 60 drückt (Fig. 10).

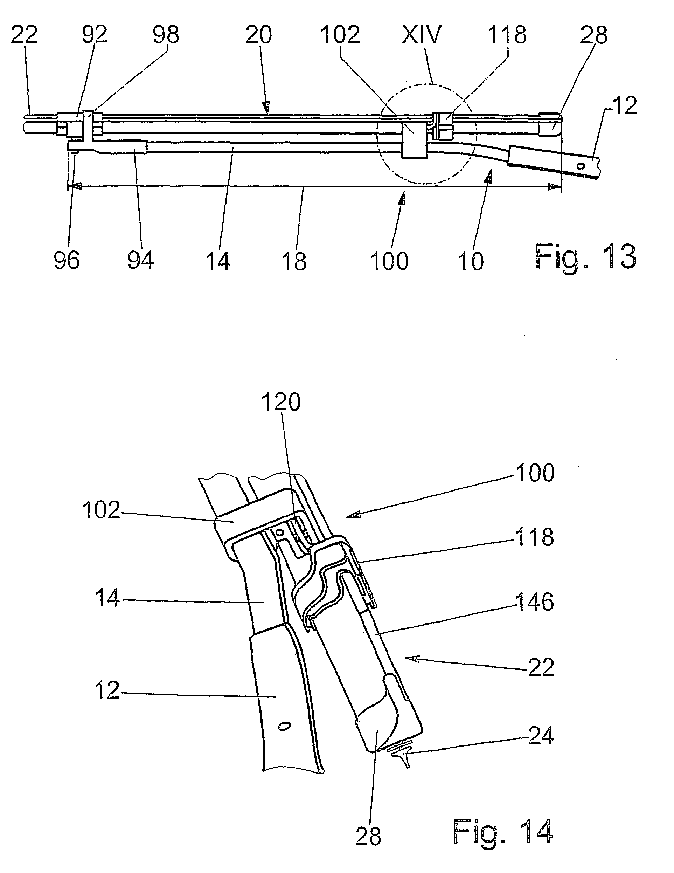

Bei der Ausführung nach Fig. 13 bis Fig. 18 ist das Wischblatt 20 mit einem Verbindungsstück 92 nach dem so genannten Sidelock-Prinzip mit der Wischstange 14 gelenkig verbunden. Dazu ist am freien Ende der Wischstange 14 ein Lagerteil 94 befestigt, auf dessen Lagerbolzen 96 das Verbindungsstück 92 schwenkbar gelagert ist. Eine am Lagerteil 94 angeformte Brücke 98 mit einem abgewinkeltem Ende verriegelt die Gelenkverbindung im montierten Zustand in axialer Richtung des Lagerbolzens 96.

Das Wischblatt 20, das bei dieser Ausführung seitlich zur Wischstange 14 verläuft, wird von einer Vorrichtung, einer Wischblattführung 100 seitlich geführt, deren Führungsbügel 102 mittels eines Klippteils 110 an der Wischstange 14 befestigt ist. Der Führungbügel 102 besitzt zwei parallel zueinander und etwa senkrecht zur Windschutzscheibe 26 verlaufende Führungswangen 104 mit einander zugewandten Führungsflächen 106, die zweckmäßigerweise ein konvexes Querschnittprofil aufweisen. An einem Ende sind die Führungswangen 104 über eine Deckwand 108 mit dem in dieser Ausführung seitlichen Klippteil 110 verbunden, dessen Rastnasen 112 im montierten Zustand die Wischstange 14 umfassen. Zum Versteifen des Führungsbügels 102 ist die dem Klippteil 110 zugewandte Führungswange 104 durch eine Rippe 114 an den oberen Teil der benachbarten Rastnase 112 angebunden. Die Führungsflächen 106 sind am freien Ende der Führungswangen 104 durch einen Steg 116 begrenzt, der gleichzeitig zum Versteifen des Führungsbügels 102 dient.

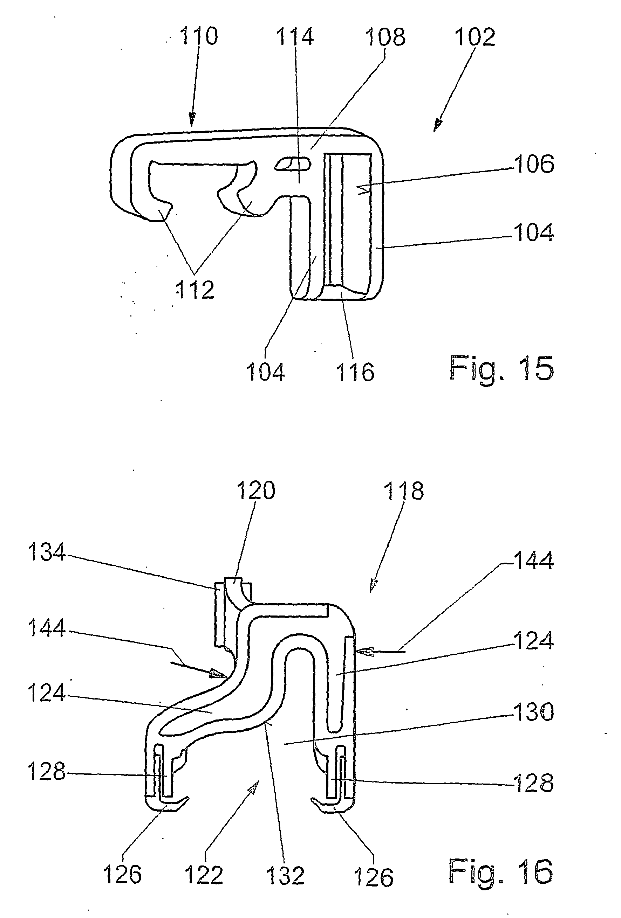

Im Bereich 18 zwischen dem Endklipp 28 und dem Verbindungsstück 92 ist auf dem gelenkfreien Wischblatt 20, das ein Spoilerprofil aufweist (Fig. 14), ein Zwischenklipp 118 befestigt. Dieser besitzt eine Zange 122 mit zwei Armen 124, die einen Freiraum 130 begrenzen (Fig. 16). Die Innenkontur 132 des Freiraums 130 ist der Außenkontur des Wischblatts 20 bzw. dessen Wischleistenträgers 22 angepasst. Zum Befestigen des Zwischenklipps 118 auf dem Wischblatt 20 dienen zwei Rastnasen 126 an den Enden der Arme 124. Im Bereich der Rastnasen 126 befinden sich auf der Innenseite der Arme 124 Federzungen 128, so dass der Zwischenklipp 118 spielfrei auf dem Wischblatt 20 sitzt. Wird auf den oberen Teil der Arme 124 der Zange 122 in Richtung der Pfeile 144 ein Druck ausgeübt, öffnen sich die Rastnasen 126 und der Zwischenklipp 118 kann leicht montiert oder demontiert werden.
An der Zange 122 ist ein Führungszapfen 120 angeformt, der in Längsrichtung des Wischblatts 20 und seitlich versetzt zu dessen als Kamm 146 bezeichneten höchsten Stelle auf der Seite der Wischstange 14 verläuft. Dadurch ergibt sich bei einer guten Raumausnutzung eine kurze stabile Führung zwischen dem Führungsbügel 102 und dem Zwischenklipp 118.

Zum Ausgleich von Fertigungstoleranzen kann der Führungszapfen 120 eine definierte seitliche Nachgiebigkeit aufweisen. Dazu besitzt er beispielsweise eine längliche rechteckige oder ovale Querschnittkontur mit einer maximalen Höhe 138 und einer maximalen Breite 140. Durch das Verhältnis der maximalen Höhe 138 zur maximalen Breite 140 kann die seitliche Nachgiebigkeit den gegebenen Anforderungen angepasst werden. Ferner kann die Nachgiebigkeit mittels eines Schlitzes 142 modifiziert werden, der auf der Seite des Führungszapfens 120 in der Zange 122 quer zur Längsrichtung des Führungszapfens 120 vorgesehen ist.

An den Seitenflächen des Führungszapfens 120 sind Führungsflächen 136 vorgesehen, die mit den Führungsflächen 106 der Führungswangen 104 des Führungsbügels 102 zusammen wirken. Damit nicht der Führungszapfen 120 beim Abheben des Wischblatts 20 von der Windschutzscheibe 26 aus dem Führungsbügel 102 rutscht, sind die Führungsflächen 136 in Längsrichtung durch Nocken 134 begrenzt.

Alle Führungszapfen 32, 40 120 können sowohl mit einem Führungsbügel 50 als auch mit einem Führungsbügel 102 kombiniert werden, die ihrerseits am Ende des Wischblatts 20 oder mehr zur Gelenkverbindung hin angeordnet sein können.

### Bezugszeichen

- 10: Wischarm
- 12: Gelenkteil
- 14: Wischstange
- 16: Verbindungsstück
- 18: Bereich
- 20: Wischblatt
- 22: Wischleistenträger
- 24: Wischleiste
- 26: Windschutzscheibe
- 28: Endklipp
- 30: Wischblattführung
- 32: Führungszapfen
- 34: Führungsfläche
- 36: Haltenase
- 38: Führungswand
- 40: Führungszapfen
- 42: Freiraum
- 44: Federelement
- 46: Federelement
- 48: Spalt
- 50: Führungsbügel
- 52: Seitenteil
- 54: Seitenteil
- 56: Deckwand
- 58: Führungswange
- 60: Führungsflächen
- 62: Haltenase
- 64: Rastzapfen
- 66: Federzunge
- 68: Buckel
- 70: Federzunge
- 72: Federzunge
- 74: Schlitz
- 76: Schlitz
- 78: Steg
- 80: Durchbruch
- 82: Federzunge
- 84: Bohrung
- 86: Stützrippe
- 88: Haltenase
- 90: Federeinhängung
- 92: Verbindungsstück

## Patentansprüche

1. Vorrichtung (30, 100) zum seitlichen Führen eines Wischblatts (20), das einen Wischleistenträger (22) mit einer Wischleiste (24) umfasst, wobei die Vorrichtung einen Klipp (28, 118) aufweist, **dadurch gekennzeichnet, dass** der Klipp an einem Ende eines Führungszapfens (32, 40, 120) angeformt ist, und auf dem Wischleistenträger (22) und/oder der Wischleiste (24) zu befestigen ist, wobei der Führungszapfen (32, 40, 120) sich ausgehend von seinem angebundenen Ende in Längsrichtung des Wischblatts (20) erstreckt und seitliche Führungsflächen (34, 136) besitzt, die eine konvexe Querschnittkontur besitzen.

2. Vorrichtung (30, 100) nach Anspruch 1, **dadurch gekennzeichnet, dass** der Klipp ein Endklipp (28) ist, der am Ende eines gelenkfreien Wischblatts (20) sitzt, und dass der Führungszapfen (32, 40) das Ende der Wischleiste (24) in Längsrichtung überragt.

3. Vorrichtung (30, 100) nach Anspruch 1, **dadurch gekennzeichnet, dass** der Klipp ein Zwischenklipp (118) mit einer Zange (122) ist, deren Freiraum (130) zwischen zwei Armen (124) eine Innenkontur (132) besitzt, die der Außenkontur eines gelenkfreien Wischleistenträgers (22) angepasst ist, wobei die Zange (122) mit Rastnasen (126) auf dem Wischleistenträger (22) zu befestigen und an der Zange (122) ein in Längsrichtung des Wischblatts (20) verlaufender Führungszapfen (120) mit seitlichen Führungsflächen (136) angeformt ist.

4. Vorrichtung (30, 100) nach Anspruch 3, **dadurch gekennzeichnet, dass** die Zange (122) an ihrer Innenkontur (132) im Bereich mindestens einer Rastnase (126) eine Federzunge (128) aufweist, an der der Wischleistenträger (22) im montierten Zustand spielfrei anliegt.

5. Vorrichtung (30, 100) nach Anspruch 3 oder 4, **dadurch gekennzeichnet, dass** die Zange (122) an ihrem Ende, das dem Führungszapfen (120) zugewandt ist, einen zum Führungszapfen (120) quer verlaufenden Schlitz (142) aufweist.

6. Vorrichtung (30, 100) nach einem der Ansprüche 3 bis 5, **dadurch gekennzeichnet, dass** die Arme (124) der Zange (122) so gestaltet sind, dass sich die Rastnasen (126) bei einem seitlichen Druck von außen am oberen Teil der Zange (122) lösen.

7. Vorrichtung (30, 100) nach einem der vorhergehenden Ansprüche, **dadurch gekennzeichnet, dass** der Führungszapfen (32, 40) an seinem freien Ende eine Haltenase (36) besitzt.

8. Vorrichtung (30, 100) nach einem der Ansprüche 1 bis 6, **dadurch gekennzeichnet, dass** die Führungsflächen (136) des Führungszapfens (120) in Längsrichtung durch Nocken (134) begrenzt sind.

9. Vorrichtung (30, 100) nach einem der vorhergehenden Ansprüche, **dadurch gekennzeichnet, dass** der Führungszapfen (32, 40, 120) an der oberen Begrenzung des Klipps (28, 118) angeordnet ist.

10. Vorrichtung (30, 100) nach einem der vorhergehenden Ansprüche, **dadurch gekennzeichnet, dass** der Führungszapfen (120) eine längliche Querschnittkontur besitzt, bei der das Verhältnis der maximalen Höhe (138) zur maximalen Breite (140) größer eins ist.

11. Vorrichtung (30, 100) nach einem der vorhergehenden Ansprüche, **dadurch gekennzeichnet, dass** der Führungszapfen (120) seitlich versetzt zu einem Kamm (146) des Wischleistenträgers (22) verläuft.

12. Vorrichtung (30, 100) nach einem der vorhergehenden Ansprüche, **dadurch gekennzeichnet, dass** der Führungszapfen (40) zwei Führungswände (38) mit seitlichen Führungsflächen (34) aufweist, die einen Freiraum (42) begrenzen und durch ein Federelement (44, 46) gegeneinander abgestützt sind, wobei im Falle einer Haltenase (36) diese durch einen Spalt (48) in zwei den Führungswänden (38) zugeordnete Teile getrennt ist.

13. Vorrichtung (30, 100) nach Anspruch 13, **dadurch gekennzeichnet, dass** das Federelement eine V-förmige Biegefeder (44) ist.

14. Vorrichtung (30, 100) nach Anspruch 12, **dadurch gekennzeichnet, dass** das Federelement eine schräg zu den Führungswänden (38) verlaufende Blattfeder (46) ist.

15. Vorrichtung (30, 100) nach einem der vorhergehenden Ansprüche, **dadurch gekennzeichnet, dass** sie einen Führungsbügel (50, 102) umfasst, der an einem Wischarm (10) zu befestigen ist und zwei parallele, durch eine Deckwand (56, 108) miteinander verbundene Führungswangen (58, 104) aufweist, die an ihren zugewandten Seiten Führungsflächen (60) besitzen, zwischen denen der Führungszapfen (32, 40, 120) geführt wird, wobei der Führungsbügel (50, 102) Rastmittel (64, 72, 110) aufweist, die bei der Montage am Wischarm (10) einrasten.

16. Vorrichtung (30, 100) nach Anspruch 15, **dadurch gekennzeichnet, dass** der Führungsbügel (50) ein im Wesentlichen u-förmiges Querschnittprofil mit zwei Seitenwänden (52, 54) aufweist, das dem Querschnittprofil eines zuzuordnenden Wischarms (10) angepasst ist, wobei die Führungswangen (58) Teile der Seitenwände (52, 54) bilden.

17. Vorrichtung (30, 100) nach Anspruch 16, **dadurch gekennzeichnet, dass** die Rastmittel an den Außenflächen der Seitenteile (52, 54) des Führungsbügels (50) angeordnete Rastzapfen (64) sind, die bei der Montage in entsprechende Bohrungen (84) des Wischarms (10) einrasten.

18. Vorrichtung (30, 100) nach Anspruch 16, **dadurch gekennzeichnet, dass** die Rastmittel Federzungen (72) sind, die sich in montiertem Zustand mit ihren freien Stirnflächen an Haltenasen (88) abstützen, die vom unteren Rand des Wischarms (10) um etwa 90 Grad in den Freiraum des Profils des Wischarms (10) abgewinkelt sind.

19. Vorrichtung (30, 100) nach einem der Ansprüche 15 bis 18, **dadurch gekennzeichnet, dass** die Führungswangen (58) an ihren freien Enden nach innen weisende Haltenasen (62) besitzen.

20. Vorrichtung (30, 100) nach einem der Ansprüche 15 bis 19, **dadurch gekennzeichnet, dass** mindestens eine der Führungswangen (58) teilweise als Federzunge (82) ausgebildet ist, die einen Teil der Führungsfläche (60) bildet.

21. Vorrichtung (30, 100) nach einem der Ansprüche 15 bis 20, **dadurch gekennzeichnet, dass** sich der Führungsbügel (50) über Federzungen (66, 70) im Bereich der Deckwand (56) innen an dem Wischarm (10) abstützt.

22. Vorrichtung (30, 100) nach einem der Ansprüche 15 bis 21, **dadurch gekennzeichnet, dass** der Führungsbügel (50) an seiner Außenfläche verteilt Buckel (68) aufweist, die definierte Kontaktstellen zum Wischarm (10) bilden.

23. Vorrichtung (30, 100) nach einem der Ansprüche 15 bis 22, **dadurch gekennzeichnet, dass** sich der Führungsbügel (50) über eine Federzunge (70) in Längsrichtung an einer Federeinhängung (90) eines Gelenkteils (12) des Wischarms (10) abstützt, während sich der Führungsbügel (50) und entsprechend das Gelenkteil (12) zu einer Wischstange (14) hin seitlich verjüngen.

24. Vorrichtung (30, 100) nach einem der Ansprüche 16 bis 23, **dadurch gekennzeichnet, dass** die Seitenwände (52, 54) des Führungsbügels (50) durch eine gebogene, federnd nachgiebige Stützrippe (86) gegenseitig abgestützt sind.

25. Vorrichtung (30, 100) Anspruch 16, **dadurch gekennzeichnet, dass** der Führungsbügel (102) einen Klippteil (110) mit zwei Rastnasen (112) besitzt, der durch die Deckwand (108) mit den Führungswangen (104) verbunden ist.

26. Vorrichtung (30, 100) nach Anspruch 26, **dadurch gekennzeichnet, dass** die zum Klippteil (110) weisende Führungswange (104) mit einer Rippe (114) an einer Rastnase (112) im oberen Bereich des Klippteils (110) angebunden ist.

27. Vorrichtung (30, 100) nach einem der Ansprüche 15 bis 19, **dadurch gekennzeichnet, dass** die Führungswangen (104) an ihren freien Enden durch einen Steg (116) miteinander verbunden sind.

28. Vorrichtung (30, 100) nach einem der Ansprüche 16 bis 23, **dadurch gekennzeichnet, dass** die Führungsflächen (60, 106) des Führungsbügels (50, 102) eine konvexe Querschnittkontur aufweisen.

## Claims

1. Device (30, 100) for laterally guiding a wiper blade (20) which comprises a wiper-strip support (22) with a wiper strip (24), the device having a clip (28, 118), **characterized in that** the clip is integrally formed at one end of a guide pin (32, 40, 120) and is to be fastened on the wiper-strip support (22) and/or the wiper strip (24), the guide pin (32, 40, 120) extending, starting from its connected end, in the longitudinal direction of the wiper blade (20) and having lateral guide surfaces (34, 136) which have a convex cross-sectional contour.

2. Device (30, 100) according to Claim 1, **characterized in that** the clip is an end clip (28) which sits at the end of a joint-free wiper blade (20), and **in that** the guide pin (32, 40) protrudes over the end of the wiper strip (24) in the longitudinal direction.

3. Device (30, 100) according to Claim 1, **characterized in that** the clip is in an intermediate clip (118) with pincers (122) whose clearance (130) between two arms (124) has an internal contour (132) which is matched to the external contour of a joint-free wiper-strip support (22), in which the pincers (122) are to be fastened on the wiper-strip support (22) by latching lugs (126), and a guide pin (120), which runs in the longitudinal direction of the wiper blade (20), is integrally formed on the pincers (122) by means of lateral guide surfaces (136).

4. Device (30, 100) according to Claim 3, **characterized in that**, on their internal contour (132), the pincers (122) have, in the region of at least one latching lug (126), a spring tongue (128) against which the wiper-strip support (22) bears in a play-free manner in the fitted state.

5. Device (30, 100) according to Claim 3 or 4, **characterized in that**, at their end which faces the guide pin (120), the pincers (122) have a slot (142) running transversely with respect to the guide pin (120).

6. Device (30, 100) according to one of Claims 3 to 5, **characterized in that** the arms (124) of the pincers (122) are designed in such a manner that the latching lugs (126) are realized when there is a lateral pressure from the outside on the upper part of the pincers (122).

7. Device (30, 100) according to one of the preceding claims, **characterized in that** the guide pin (32, 40) has a retaining lug (36) at its free end.

8. Device (30, 100) according to one of Claims 1 to 6, **characterized in that** the guide surfaces (136) of the guide pin (120) are bounded in the longitudinal direction by cams (134).

9. Device (30, 100) according to one of the preceding claims, **characterized in that** the guide pin (32, 40, 120) is arranged on the upper boundary of the clip (28, 118).

10. Device (30, 100) according to one of the preceding claims, **characterized in that** the guide pin (120) has an elongate cross-sectional contour, in which the ratio of the maximum height (138) to the maximum width (140) is greater than one.

11. Device (30, 100) according to one of the preceding claims, **characterized in that** the guide pin (120) runs laterally offset to a ridge (146) of the wiper-strip support (22).

12. Device (30, 100) according to one of the preceding claims, **characterized in that** the guide pin (40) has two guide walls (38) with lateral guide surfaces (34) which bound a clearance (42) and are mutually supported by a spring element (44, 46), with, in the event of a retaining lug (36), the latter being separated by a gap (48) into two parts assigned to the guide walls (38).

13. Device (30, 100) according to Claim 12, **characterized in that** the spring element is a V-shaped bending spring (44).

14. Device (30, 100) according to Claim 12, **characterized in that** the spring element is a leaf spring (46) running obliquely with respect to the guide walls (38).

15. Device (30, 100) according to one of the preceding claims, **characterized in that** it comprises a guide clip (50, 102) which is to be fastened to a wiper arm (10) and has two parallel guide cheeks (58, 104) which are connected to each other by a top wall (56, 108) and, on their facing sides, having guide surfaces (60) between which the guide pin (32, 40, 120) is guided, the guide clip (50, 102) having latching means (64, 72, 110) which latch into place during installation on the wiper arm (10).

16. Device (30, 100) according to Claim 15, **characterized in that** the guide clip (50) has an essentially U-shaped cross-sectional profile with two side walls (52, 54), which is matched to the cross-sectional profile of a wiper arm (10) to be assigned to it, the guide cheeks (58) forming parts of the side walls (52, 54).

17. Device (30, 100) according to Claim 16, **characterized in that** the latching means are latching pins (64) which are arranged on the outer surfaces of the side parts (52, 54) of the guide clip (50) and latch into corresponding holes (84) of the wiper arm (10) during installation.

18. Device (30, 100) according to Claim 16, **characterized in that** the latching means are spring tongues (72) which, in the fitted state, are supported with their free end surfaces on retaining lugs (88) which are angled from the lower edge of the wiper arm (10) through approximately 90 degrees into the clearance of the profile of the wiper arm (10).

19. Device (30, 100) according to one of Claims 15 to 18, **characterized in that**, at their free ends, the guide cheeks (58) have inwardly pointing retaining lugs (62).

20. Device (30, 100) according to one of Claims 15 to 19, **characterized in that** at least one of the guide cheeks (58) is partially designed as a spring tongue (82) which forms part of the guide surface (60).

21. Device (30, 100) according to one of Claims 15 to 20, **characterized in that** the guide clip (50) is supported on the inside on the wiper arm (10) via spring tongues (66, 70) in the region of the top wall (56).

22. Device (30, 100) according to one of Claims 15 to 21, **characterized in that** the guide clip (50) has bulges (68) which are distributed on its outer surface and form defined contact points to the wiper arm (10).

23. Device (30, 100) according to one of Claims 15 to 22, **characterized in that** the guide clip (50) is supported in the longitudinal direction on a spring-attachment means (90) of an articulated part (12) of the wiper arm (10) while the guide clip (50) and, correspondingly, the articulated part (12) taper laterally towards a wiper rod (14).

24. Device (30, 100) according to one of Claims 16 to 23, **characterized in that** the side walls (52, 54) of the guide clip (50) are mutually supported by a curved, resiliently flexible supporting rib (86).

25. Device (30, 100) according to Claim 16, **characterized in that** the guide clip (102) has a clip part (110) with two latching lugs (112), which clip part is connected to the guide cheeks (104) by the top wall (108).

26. Device (30, 100) according to Claim 25, **characterized in that** the guide cheek (104) pointing towards the clip part (110) is connected by a rib (114) to a latching lug (112) in the upper region of the clip part (110).

27. Device (30, 100) according to one of Claims 15 to 19, **characterized in that** the guide cheeks (104) are connected to each other at their free ends by means of a web (116).

28. Device (30, 100) according to one of Claims 16 to 23, **characterized in that** the guide surfaces (60, 106) of the guide clip (50, 102) have a convex cross-sectional contour.

## Revendications

1. Dispositif (30, 100) pour guider latéralement un balai d'essuie-glace (20), comportant un support (22) muni d'une lame d'essuyage (24), le dispositif ayant une pièce enclipsée (28, 118),
**caractérisé en ce que**
la pièce enclipsée est prévue à l'extrémité d'un goujon de guidage (32, 40, 120) et se fixe sur le support (22) et/ou la lame d'essuyage (24), le goujon de guidage (32, 40, 120) s'étendant à partir de son extrémité fixée, dans la direction longitudinale du balai d'essuie-glace (20) et ayant des surfaces latérales de guidage (34, 136) munies d'un contour de section convexe.

2. Dispositif (30, 100) selon la revendication 1,
**caractérisé en ce que**
la pièce d'enclipsage est une pièce d'extrémité (28) prévue à l'extrémité d'un balai d'essuie-glace (20) sans articulation et le goujon de guidage (32, 40) chevauche l'extrémité de la lame d'essuyage (24) dans la direction longitudinale.

3. Dispositif (30, 100) selon la revendication 1,
**caractérisé en ce que**
la pièce d'enclipsage est une pièce intermédiaire (118) munie d'une pince (122) dans l'espace libre (130) entre deux bras (124) avec un contour intérieur (132) adapté au contour extérieur d'un support de lame d'essuyage (22) sans articulation, et la pince (122) a des becs d'accrochage (126) fixés sur le support de la lame d'essuyage (22) et comporte un goujon de guidage (120) dirigé dans la direction longitudinale du balai d'essuie-glace (20) avec des surfaces latérales de guidage (136).

4. Dispositif (30, 100) selon la revendication 3,
**caractérisé en ce qu'**
au niveau de son contour intérieur (132), dans la zone d'au moins un bec d'accrochage (126), la pince (122) présente une languette élastique (128) contre laquelle s'applique sans jeu le support de la lame d'essuyage (22) une fois monté.

5. Dispositif (30, 100) selon l'une quelconque des revendications 3 ou 4,
**caractérisé en ce qu'**
à son extrémité tournée vers le goujon de guidage (120), la pince (122) comporte une fente (142) dirigée transversalement au goujon de guidage (120).

6. Dispositif (30, 100) selon l'une quelconque des revendications 3 à 5,
**caractérisé en ce que**
les bras (124) de la pince (122) sont formés pour que les becs d'accrochage (126) se détachent de la partie supérieure de la pince (122) sous l'effet d'une poussée latérale.

7. Dispositif (30, 100) selon l'une quelconque des revendications précédentes,
**caractérisé en ce que**
l'extrémité du goujon de guidage (32, 40) comporte un bec d'accrochage (36).

8. Dispositif (30, 100) selon l'une quelconque des revendications 1 à 6,
**caractérisé en ce que**
les surfaces de guidage (136) du goujon de guidage (120) sont délimitées par des cames (134) dans la direction longitudinale.

9. Dispositif (30, 100) selon l'une quelconque des revendications précédentes,
**caractérisé en ce que**
le goujon de guidage (32, 40, 120) est prévu à la limite supérieure de la pièce d'enclipsage (28, 118).

10. Dispositif (30, 100) selon l'une quelconque des revendications précédentes,
**caractérisé en ce que**
le goujon de guidage (120) a un contour de section allongé dont le rapport entre la hauteur maximale (138) et la largeur maximale (140) est supérieure à l'unité.

11. Dispositif (30, 100) selon l'une quelconque des revendications précédentes,
**caractérisé en ce que**
le goujon de guidage (120) est décalé latéralement par rapport à un peigne (146) du support de la lame d'essuyage (22).

12. Dispositif (30, 100) selon l'une quelconque des revendications précédentes,
**caractérisé en ce que**
le goujon de guidage (40) comporte deux parois de guidage (38) avec des surfaces de guidage latérales (34) délimitant un espace libre (42) et s'appuyant réciproquement par l'intermédiaire d'un élément élastique (44, 46), et dans le cas d'un bec de retenue (36), celui-ci est divisé par un intervalle (48) en deux parties associées aux parois de guidage (38).

13. Dispositif (30, 100) selon la revendication 12,
**caractérisé en ce que**
l'élément élastique est un ressort de flexion (44) en forme de V.

14. Dispositif (30, 100) la revendication 12,
**caractérisé en ce que**
l'élément élastique est un ressort-lame (46) incliné par rapport aux parois de guidage (38).

15. Dispositif (30, 100) selon l'une quelconque des revendications précédentes,
**caractérisé par**
un arceau de guidage (50, 102) fixé à un bras d'essuie-glace (10) et comportant deux joues de guidage (58, 104) parallèles, reliées par une cloison supérieure (56, 108), ces joues ayant des surfaces de guidage (60) au niveau de leurs côtés tournés l'un vers l'autre et entre lesquels est guidé le goujon de guidage (32, 40, 120),
l'étrier de guidage (50, 102) comportant des moyens d'accrochage (64, 72, 110) qui s'accrochent au bras d'essuie-glace (10) à l'état monté.

16. Dispositif (30, 100) selon la revendication 15,
**caractérisé en ce que**
l'étrier de guidage (50) a un profil de section principalement en forme de U avec deux parois latérales (52, 54) dont le profil de section est associé à un bras d'essuie-glace (10), les joues de guidage (58) faisant partie des parois latérales (52, 54).

17. Dispositif (30, 100) selon la revendication 16,
**caractérisé en ce que**
les moyens d'accrochage sont des goujons d'accrochage (64) prévus sur les surfaces extérieures des parties latérales (52, 54) de l'étrier de guidage (50) et qui s'accrochent dans des perçages correspondants (84) du bras d'essuie-glace (10) au montage.

18. Dispositif (30, 100) selon la revendication 16,
**caractérisé en ce que**
les moyens d'accrochage sont des languettes élastiques (72) qui, à l'état monté, s'appuient par leur surface frontale libre contre les becs d'accrochage (88) recourbés par rapport au bras inférieur du bras d'essuie-glace (10) d'environ 90° dans l'espace libre du profil du bras d'essuie-glace (10).

19. Dispositif (30, 100) selon l'une quelconque des revendications 15 à 18,
**caractérisé en ce que**
les joues de guidage (58) ont des becs d'accrochage (62) dont les extrémités libres sont tournées vers l'intérieur.

20. Dispositif (30, 100) selon l'une quelconque des revendications 15 à 19,
**caractérisé en ce qu'**
au moins l'une des joues de guidage (58) est réalisée en partie comme languette élastique (82) qui forme une partie de la surface de guidage (60).

21. Dispositif (30, 100) selon l'une quelconque des revendications 15 à 20,
**caractérisé en ce que**
l'étrier de guidage (50) s'appuie par des languettes élastiques (66, 70) au niveau de la paroi supérieure (56) à l'intérieur du bras d'essuie-glace (10).

22. Dispositif (30, 100) selon l'une quelconque des revendications
15 à 21,
**caractérisé en ce que**
l'étrier de guidage (50) présente des bossages (68) répartis sur sa surface extérieure et qui forment des points de contact définis par rapport au bras d'essuie-glace (10).

23. Dispositif (30, 100) selon l'une quelconque des revendications 15 à 22,
**caractérisé en ce que**
l'étrier de guidage (50) s'appuie par l'intermédiaire d'une languette élastique (70) dans la direction longitudinale contre un moyen d'accrochage de ressort (90) d'une pièce articulée (12) du bras d'essuie-glace (10), alors que l'étrier de guidage (50) et la pièce d'articulation (12) correspondante se rétrécissent latéralement vers une tige d'essuie-glace (14).

24. Dispositif (30, 100) selon l'une quelconque des revendications 16 à 23
**caractérisé en ce que**
les parois latérales (52, 54) de l'étrier de guidage (50) sont appuyées réciproquement par l'intermédiaire d'une nervure d'appui (86) recourbée, souple élastiquement.

25. Dispositif (30, 100) selon la revendication 16,
**caractérisé en ce que**
l'étrier de guidage (102) comporte une pièce d'enclipsage (110) à deux becs d'accrochage (112), cette pièce étant reliée aux joues de guidage (104) par la paroi supérieure (108).

26. Dispositif (30, 100) selon la revendication 25,
**caractérisé en ce que**
les joues de guidage (104) tournées vers la pièce d'enclipsage (110) sont fixées par l'intermédiaire d'une nervure (114) à un bec d'accrochage (112) dans la zone supérieure de la pièce d'enclipsage (110).

27. Dispositif (30, 100) selon l'une quelconque des revendications 15 à 19,
**caractérisé en ce que**
les extrémités libres des joues de guidage (104) sont reliées par une entretoise (116).

28. Dispositif (30, 100) selon l'une quelconque des revendications 16 à 23,
**caractérisé en ce que**
les surfaces de guidage (60, 106) de l'étrier de guidage (50, 102) ont un contour de section convexe.
